# FASCICULE DE BREVET EUROPEEN

(11) **EP 3 752 811 B1**
(45) Date de publication et mention de la délivrance du brevet: **30.03.2022**
(21) Numéro de dépôt: 19710736.0
(22) Date de dépôt: 11.02.2019
(51) Int. Cl.: G01M 5/00, G01M 15/14, F02K 1/00

(54) **PROCEDE ET SYSTEME DE DETECTION D'UN ENDOMMAGEMENT D'AUBES MOBILES D'UN AERONEF**
VERFAHREN UND SYSTEM ZUR ERKENNUNG VON SCHÄDEN AN DEN BEWEGLICHEN SCHAUFELN EINES FLUGZEUGES
METHOD AND SYSTEM FOR DETECTING DAMAGE TO THE MOBILE BLADES OF AN AIRCRAFT

(30) Priorité: 12.02.2018 FR 1851167
(43) Date de publication de la demande: 23.12.2020
(73) Titulaire: SAFRAN AIRCRAFT ENGINES, 75015 Paris (FR)
(72) Inventeur: LHOMMEAU, Tony, 77550 MOISSY-CRAMAYEL (FR); COGNOT, Lorris Michel, 77550 MOISSY-CRAMAYEL (FR); GARNIER, Alméric Pierre Louis, 77550 MOISSY-CRAMAYEL (FR)
(74) Mandataire: Cabinet Beau de Loménie
(86) Numéro de dépôt international: PCT/FR2019/050295
(87) Numéro de publication internationale: WO 2019/155176

(56) Documents cités:
- WO-A1-2016/062946
- FR-A1- 2 968 038
- FR-A1- 2 986 269
- US-A1- 2006 122 798
- US-A1- 2014 100 798

## Description

### Arrière-plan de l'invention

L'invention concerne le domaine de la surveillance d'un moteur d'aéronef et plus particulièrement, la détection d'un éventuel endommagement d'une ou plusieurs aubes mobiles sur une roue aubagée d'un moteur d'aéronef.

Les soufflantes des nouvelles générations de moteur d'aéronef sont équipées d'aubes composites. L'intégration de ces aubes dans une soufflante permet une amélioration sensible des performances de celle-ci et un gain en masse non-négligeable.

Cependant, la surveillance de l'état de santé d'aubes composites s'avère complexe à mettre en œuvre. Tandis que pour des aubes métalliques une simple inspection à l'œil nu permet de détecter directement un éventuel endommagement de celles-ci, un tel type de détection s'avère limitée pour des aubes composites. Par exemple, un choc sur une aube composite peut entraîner un délaminage et des dommages internes non-observables à l'œil nu et donc plus difficiles à détecter. Les aubes composites étant des produits à forte valeur ajoutée, il est fortement souhaitable de pouvoir planifier en amont une maintenance conditionnelle de celles-ci afin de réduire les délais et coûts de la maintenance au sol de l'aéronef. La planification de cette maintenance requiert donc une détection et une identification performantes de tout dommage éventuel d'une aube.

Une méthode de détection d'endommagement d'aube connue consiste en l'utilisation de capteurs tip-timing. Ces capteurs détectent et comptent le passage des aubes par rapport à une base de temps. Les mesures des capteurs tip-timing sont ensuite utilisées pour calculer la fréquence propre de chaque aube, la fréquence propre donnant une information sur l'état de santé de l'aube. Cette méthode nécessite en pratique un nombre important de capteurs tip-timing pour effectuer les mesures, ainsi que d'importantes ressources en calcul afin de déterminer les fréquences propres de chaque aube. Cette solution est donc applicable uniquement sur banc d'essai, où les contraintes d'intégration (ex : encombrement, masse, ressources de calcul disponibles) sont moindres. Une telle solution n'est cependant pas transposable pour un système embarqué dans un aéronef compte tenu des contraintes d'intégration et des ressources logicielles requises. Un suivi vol à vol de l'état de santé des aubes n'est donc pas possible sans immobilisation au sol du moteur de l'aéronef.

Une autre solution connue de détection d'endommagement consiste surveiller la fréquence propre de chaque aube à l'aide d'un « Ping-test ». Au cours de ce test, chaque aube est excitée à l'aide d'une impulsion de type choc, une mesure de la réponse impulsionnelle en fréquence de chacune d'elle permettant de déduire un éventuel endommagement. Néanmoins, une fois encore, un tel procédé nécessite une immobilisation du moteur de l'aéronef afin d'être mis en œuvre.

Or il existe un besoin pour une solution embarquée dans un aéronef permettant de contrôler l'état de santé de chacune de ses aubes et d'assurer un suivi de leur état de santé vol à vol. De manière générale, ce besoin concerne tout type d'aubes, ces dernières pouvant aussi bien être en matériau composite qu'en tout autre matériau, par exemple en métal.

Le document FR 2986269 A1 divulgue un un procédé de détection d'un endommagement d'une ou plusieurs aubes mobiles constitutives d'une roue aubagée d'un moteur d'aéronef selon l'état de la technique.

### Objet et résumé de l'invention

La présente invention a pour but de remédier aux inconvénients précités.

A cet effet, l'invention propose un procédé de détection d'un endommagement d'une ou plusieurs aubes mobiles constitutives d'une roue aubagée d'un moteur d'aéronef, le procédé comprenant une mesure du régime du moteur, et les étapes suivantes pour chaque aube:
a) une acquisition, par une pluralité de capteurs distincts et spatialement séparés, de mesures relatives au temps de passage du sommet de l'aube au droit de chaque capteur ; et
b) un calcul, pour chaque capteur, d'une déflexion au sommet de l'aube à partir des mesures du capteur et du régime du moteur ; le procédé comprenant en outre les étapes suivantes :
c) une extraction d'une composante dynamique de déflexion pour chacune des déflexions calculées ;
d) une détection du nombre de capteurs fonctionnant ;
e) une sélection des composantes dynamiques à traiter en fonction du nombre de capteurs fonctionnant détecté à l'étape d) ;
f) une détermination, pour au moins une aube, d'une variation de comportement dynamique de l'aube pour chaque capteur fonctionnant à partir de la composante dynamique correspondante ; et,
g) pour chaque aube pour laquelle une variation de comportement dynamique a été déterminée, une identification d'un endommagement de l'aube lorsque la variation de comportement dynamique déterminée pour cette aube est supérieure ou égale à un seuil de variation définissant un seuil d'endommagement de l'aube.

Le procédé décrit ci-dessus permet d'identifier, à l'aide des mesures d'une pluralité de capteurs, l'endommagement d'au moins une aube mobile à partir d'une détection indirecte de la dérive de sa fréquence propre. Cette identification est applicable à tout type d'aube, par exemple à des aubes composites ou métalliques. La mesure des temps de passage de chaque aube au droit de chaque capteur mise en correspondance avec la connaissance du régime du moteur permettent de calculer les déflexions relatives aux sommets de chaque aube et d'en extraire leurs composantes dynamiques respectives. D'éventuelles dérives du comportement dynamique de chaque aube sont ensuite surveillées en observant d'éventuelles variations de leurs composantes dynamiques, la dérive du comportement dynamique d'une aube donnant une indication indirecte sur la dérive de la fréquence propre de celle-ci.

En effet, un endommagement d'une aube conduirait à une dérive de sa fréquence propre, impactant les temps de passages mesurés pour celle-ci par chaque capteur et conduisant donc à une dérive de la composante dynamique de sa déflexion. Ainsi, la détection d'une dérive du comportement dynamique d'une aube, déduit de la variation de sa composante dynamique, et la comparaison de celle-ci avec un seuil prédéterminé, caractérisant un état de santé de l'aube, permet de conclure ou non à l'endommagement de cette aube.

L'endommagement éventuel d'une aube peut donc être détecté sans pour autant nécessiter le calcul de sa fréquence propre. Le procédé décrit ci-dessus est donc particulièrement simple à mettre en œuvre et ne nécessite pas d'importantes ressources en calcul. Le procédé ci-dessus est donc facilement intégrable dans un système embarqué dans l'aéronef.

Par ailleurs, l'étape de détection du nombre de capteurs fonctionnant permet d'adapter dynamiquement la détection de l'endommagement d'une aube en tenant compte du nombre de capteurs fonctionnels. Notamment, les composantes dynamiques des aubes à traiter sont sélectionnées en fonction du nombre de capteurs fonctionnant, garantissant une robustesse du procédé en cas de panne d'un ou plusieurs capteurs. Il est par exemple possible de détecter l'endommagement d'une ou plusieurs aubes sur l'ensemble des plages de fonctionnement du moteur lorsqu'au moins deux capteurs sont fonctionnels. Dans l'exemple de deux capteurs, en cas de panne d'un de ces capteurs, la détection d'un endommagement d'une ou plusieurs aubes mobiles sera réalisée pour l'unique capteur fonctionnel restant et pour une plage de régime spécifiée du moteur. Le procédé reste donc robuste à la perte d'un capteur tant qu'au moins un autre capteur demeure fonctionnel. Il est donc possible de minimiser le nombre de capteurs à utiliser pour une solution embarquée, en utilisant au minimum deux capteurs. Cependant un plus grand nombre de capteurs peut être utilisé, par exemple trois, afin de garantir la robustesse du procédé contre la panne éventuelle d'un capteur et continuer à détecter l'endommagement d'au moins une aube sur l'ensemble des plages de fonctionnement du moteur. Par ailleurs dans cet exemple, en cas de panne de deux capteurs, le procédé de détection demeurera robuste, au sens où un unique capteur assurera la détection d'éventuels endommagements d'au moins une aube sur une ou plusieurs plages de fonctionnement prédéterminées du moteur.

Dans un exemple de réalisation de ce procédé, l'étape d'extraction de la composante dynamique de chaque aube mobile comprend une dé-contextualisation de cette composante, la dé-contextualisation comportant pour un même tour de la roue aubagée un calcul de la différence entre la composante dynamique de l'aube mobile et une moyenne des composantes dynamiques des autres aubes mobiles de la roue aubagée.

Dans un exemple de réalisation de ce procédé, si on détecte à l'étape d) un seul capteur en fonctionnement, les étapes de détermination f) et d'identification g) sont mises en œuvre pour au moins une plage de régime du moteur pour laquelle l'ensemble des aubes sont pré-identifiées comme présentant un même comportement vibratoire, la variation de comportement dynamique étant déterminée à l'étape f) pour l'ensemble des aubes dans ladite au moins une plage de régime du moteur.

Dans un exemple de réalisation de ce procédé, si le fonctionnement d'au moins deux capteurs est détecté à l'étape d), les étapes de détermination f) et d'identification g) sont mises en œuvre pour chaque aube mobile de la roue aubagée dans l'ensemble des plages de régime du moteur (5), et le procédé comprend en outre l'étape suivante :
h) une confirmation de l'endommagement de ladite aube à partir des endommagements identifiés à l'étape f).

Dans un exemple de réalisation de ce procédé, l'endommagement de l'aube est confirmé à l'étape h) uniquement si les mesures d'au moins deux capteurs permettent l'identification du même endommagement de l'aube. En effet, un capteur parmi une pluralité de capteurs peut être susceptible de détecter un phénomène vibratoire temporaire sur une aube. Les vibrations de ce phénomène, s'amortissant dans le temps, peuvent cependant influer temporairement sur la déflexion de l'aube sans pour autant être liée à la fréquence propre de l'aube ou affecter l'état de santé de l'aube. La confirmation de l'endommagement d'une aube identifiée à partir de plusieurs capteurs permet alors de ne prendre en compte que les informations relatives à un endommagement durable de l'aube, tout en ignorant les phénomènes temporaires détectés. Par ailleurs, bien que les phénomènes temporaires soient ici volontairement ignorés, le procédé ici décrit autorise la détection de ces phénomènes, ces derniers pouvant être stockés dans une base de données de suivi de vol.

L'invention propose également, selon un autre aspect, un programme d'ordinateur comportant des instructions de code pour la mise en œuvre du procédé résumé ci-dessus lorsqu'il est exécuté par un ordinateur.

L'invention propose également, selon un autre aspect, un système de détection d'un endommagement d'une ou plusieurs aubes mobiles constitutives d'une roue aubagée d'un moteur d'aéronef, le système comprenant :
- des moyens d'acquisition configurés pour mesurer le régime du moteur et acquérir, à l'aide d'une pluralité de capteurs distincts et spatialement séparés, pour chaque aube, des mesures relatives au temps de passage du sommet de chaque aube au droit de chaque capteur, et
- des moyens de traitement comportant un module de calcul configuré pour calculer, pour chaque capteur, une déflexion au sommet de chaque aube à partir des mesures correspondantes du capteur et du régime du moteur ;
les moyens de traitement comportant en outre:
- un module d'extraction configuré pour extraire une composante dynamique de déflexion pour chacune des déflexions calculées ;
- un module de détection configuré pour détecter le nombre de capteurs fonctionnant ;
- un module de sélection configuré pour sélectionner les composantes dynamiques à délivrer à un module de traitement en fonction du nombre de capteurs fonctionnant détectés par le module de détection ;
- un module de traitement configuré pour déterminer, pour au moins une aube, une variation de comportement dynamique d'une aube pour chaque capteur fonctionnant à partir de la composante dynamique correspondante ;
- un comparateur configuré pour identifier, pour chaque aube pour laquelle une variation de comportement dynamique a été déterminée, un endommagement d'une aube lorsque la variation de comportement dynamique déterminée de ladite aube est supérieure ou égale à un seuil de variation définissant un seuil d'endommagement de l'aube.

Dans un exemple de réalisation de ce système, le module d'extraction de la composante dynamique de chaque aube mobile comprend un sous-module de dé-contextualisation de la composante dynamique, configuré pour réaliser pour un même tour de la roue aubagée un calcul de la différence entre la composante dynamique de l'aube mobile et une moyenne des composantes dynamiques des autres aubes mobiles de la roue aubagée.

Dans un exemple de réalisation de ce système, si le fonctionnement d'un unique capteur est détecté par le module de détection, le module de traitement et le comparateur sont respectivement configurés pour déterminer une variation de déflexion et identifier un endommagement d'une aube pour au moins une plage de régime du moteur pour laquelle l'ensemble des aubes sont pré-identifiées comme présentant un même comportement vibratoire.

Dans un exemple de réalisation de ce système, si le fonctionnement d'au moins deux capteurs est détecté par le module de détection le module de traitement et le comparateur sont respectivement configurés pour déterminer une variation de déflexion et identifier un endommagement d'une aube pour chaque aube mobile de la roue aubagée dans l'ensemble des plage de régime du moteur, et les moyens de traitement comprennent en outre un module de validation configuré pour valider un endommagement d'une aube à partir des endommagements identifiés par le comparateur.

Dans un exemple de réalisation de ce système, le module de validation est configuré pour valider l'endommagement de l'aube uniquement si les mesures d'au moins deux capteurs permettent l'identification du même endommagement de l'aube.

Dans un exemple de réalisation de ce système, les capteurs sont des capteurs tip-timing installés au droit de ladite roue aubagée.

Dans un exemple de réalisation de ce système, les moyens de traitement sont intégrés dans un boitier spécifique ou dans un boitier électronique existant.

### Brève description des dessins

D'autres caractéristiques et avantages de l'invention ressortiront de la description suivante de modes particuliers de réalisation de l'invention, donnés à titre d'exemples non limitatifs, en référence aux dessins annexés, sur lesquels :
- la figure 1 illustre de manière schématique un système de détection d'un endommagement pour des aubes mobiles d'une roue aubagée d'un moteur d'aéronef ;
- la figure 2 est un organigramme selon un mode de réalisation particulier de l'invention, illustrant les étapes d'un procédé de détection d'un endommagement pour des aubes mobiles d'une roue aubagée d'un moteur d'aéronef, selon l'invention ;
- la figure 3 illustre un mode de réalisation de l'étape d'identification présente dans la figure 2.

### Description détaillée de modes de réalisation

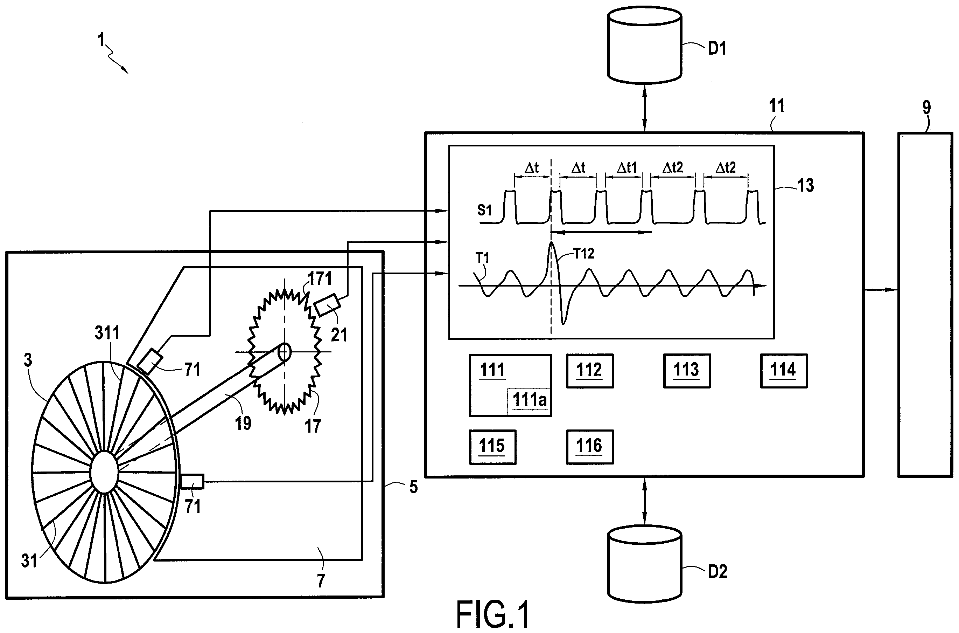

La figure 1 illustre de manière schématique un système 1 de détection d'un endommagement pour des aubes mobiles d'une roue aubagée (ou aubage) 3 d'un moteur 5 d'aéronef selon l'invention.

Ce système 1 comporte des moyens d'acquisition 7 de données, des moyens d'alertes 9, et des moyens de traitement 11 tel qu'un calculateur ou un ordinateur comprenant notamment des moyens de calcul.

Les moyens de traitement 11 sont associés à des moyens de stockage se présentant sous la forme d'une ou plusieurs bases de données D1, D2. Les moyens de traitement 11 sont en outre configurés pour exécuter un programme d'ordinateur comprenant des instructions de code conçues pour mettre en œuvre un algorithme d'acquisition, de traitement de signal, d'analyse, et d'alerte selon le procédé de détection de l'invention. Les moyens de traitement 11 peuvent être intégrés dans un boîtier spécifique ou dans un boîtier électronique existant. Par exemple, les moyens de traitement 11 peuvent faire partie du calculateur ou plus particulièrement, du dispositif de régulation numérique du moteur ECU (Engine Control Unit) ou du dispositif de suivi de l'état de santé moteur EMU (Engine Monitoring Unit).

Les moyens d'acquisition 7 comportent une pluralité de capteurs 71, deux dans l'exemple illustré. Cependant, il est possible de considérer un nombre plus élevé de capteurs 71. Les moyens d'acquisition 7 sont notamment configurés pour acquérir, pour chaque capteur 71, un signal temporel S1 relatif à des aubes 31 mobiles d'une roue aubagée 3, par exemple la roue aubagée de la soufflante (Fan) ou de toute autre roue aubagée du moteur 5. Bien que deux capteurs 71 soient ici illustrés, un unique signal S1 correspondant aux mesures d'un unique capteur 71 est ici représenté à des fins de clarté. Cependant, il est entendu que chaque capteur 71 est associé à un signal S1 qui lui est propre.

Avantageusement, les moyens d'acquisition 7 utilisent une technique de « tip-timing » pour mesurer les temps/instants de passage TOA (« Time Of Arrival ») des aubes 31 mobiles. Habituellement, cette technique est utilisée dans les bancs d'essais pour mesurer les vibrations des aubes mobiles à partir de l'espace fixe.

Conformément à l'invention et comme il sera exposé plus loin, les moyens d'acquisition 7 intégrés dans le moteur 5 d'aéronef en exploitation, comportent au moins deux capteurs tip-timing 71 installés sur le carter du moteur 5 au droit de la roue aubagée 3 de sorte à acquérir, pour chaque capteur, un signal temporel S1 propre au capteur 71.

Plus particulièrement, chaque capteur tip-timing 71 détecte et compte les passages des sommets des aubes 31 par rapport à une base de temps. Ainsi, chaque capteur tip-timing 71 peut mesurer le temps de passage courant entre les aubes 31 par rapport à un point de référence. Pour chaque capteur 71, les temps de passage (TOA) propres à chaque aube 31 peuvent ensuite être déduits des données mesurées par les moyens de traitement 11, ici via un module de calcul 13.

En d'autres termes, chaque capteur tip-timing 71 permet d'acquérir des mesures relatives aux temps/instants de passage du sommet de chaque aube 31 mobile au droit d'une zone de référence de la roue aubagée 3. Par ailleurs, afin de limiter les risques de pertes des capteurs 71, il est possible de positionner les capteurs 71 de manière à maximiser leur distance azimutale, afin de les éloigner au maximum les uns des autres. Ainsi, en cas de défaillance locale d'un capteur 71 (ex : impact d'un débris sur une aube 31, encrassement d'un capteur 71) on minimise le risque que l'ensemble des capteurs 71 soient affectés.

En fonctionnement normal, les aubes 31 vont passer devant chaque capteur tip-timing 71 de manière régulière. On mesurera donc, pour chaque capteur 71, entre le passage de deux aubes consécutives un intervalle de temps Δt à régime donné.

A l'inverse, l'altération de l'état d'une aube, due par exemple à une usure ou à l'ingestion d'un corps étranger FOD (« Foreign Object Damage »), peut se traduire par une modification de la position de l'aube au moment où celle-ci passe devant au moins un des capteurs 71. A titre d'exemple, sur la Figure 1 une des impulsions du signal S1, correspondant au passage d'une aube 311, faisant partie de l'ensemble des aubes 31, au droit d'un des capteurs tip-timing 71, est espacée des impulsions précédente et suivante par des intervalles Δt1 et Δt2 différents de l'intervalle constant Δt, traduisant une altération de l'état de l'aube 311.

Afin de pouvoir identifier chaque aube 31 (indépendamment de son état), les moyens de traitement 11 sont configurés pour analyser les différents signaux temporels S1 par rapport à une référence angulaire.

La référence angulaire peut être fournie par un capteur de « top-tour » installé au regard d'une roue phonique solidaire de la roue aubagée. A titre d'exemple, une roue phonique 17 est couplée à la roue aubagée 3. La roue phonique 17 est solidaire de l'arbre 19 du moteur 5, lui-même solidaire de la roue aubagée 3 et tourne donc à la même vitesse que cette dernière. Une des dents 171 de la roue phonique 17 présente une forme différente des autres (par exemple, plus longue) pour permettre à un capteur 21 associé au top tour d'avoir une référence angulaire. Ainsi, la Figure 1 illustre le signal T1 de la roue phonique 17 avec une impulsion de top tour T12 en correspondance avec le signal temporel S1 issu d'un des capteurs tip-timing 71.

En comparant les deux signaux, les moyens de traitement 11 peuvent identifier avec une grande précision chaque aube 31. Notamment, l'aube 311 de l'exemple précédent peut être identifiée, via la comparaison entre les signaux S1 et T1, en tant que troisième aube par rapport au top-tour T12.

Il est important de préciser ici que l'on cherche par la suite à détecter une dégradation durable des performances d'une ou plusieurs aubes 31 liée à un endommagement, et non pas une simple perturbation temporaire observable sur le signal S1. Ainsi, la référence angulaire (top tour T12) décrite ci-dessus est uniquement utilisée pour identifier chacune des aubes 31 par rapport aux autres. La détection de l'endommagement d'une aube 31, qui sera décrite par la suite, ne consiste donc pas ici en la simple observation ou détection de la variation de l'intervalle Δt entre les impulsions mesurées entre les aubes 31 par chaque capteur tip-timing 71.

On notera de plus que le moteur 5 comporte de manière habituelle, une roue phonique 17 pour mesurer le régime moteur avec un capteur 21 de top tour afin d'identifier des balourds. Ainsi, le système de détection selon l'invention exploite la roue phonique existante avec son top-tour pour identifier les aubes.

En variante, la référence angulaire peut être générée par au moins un des capteurs tip-timing 71 et une singularité sur une aube de la roue aubagée elle-même. Cette singularité peut correspondre à une aube présentant une longueur ou une largeur différente des autres aubes, ou ayant une forme spécifique ou un matériau rapporté spécifique.

Au moins un capteur tip-timing 71 ou le capteur 21 de top-tour peuvent aussi être utilisés pour mesurer le régime du moteur 5 de l'aéronef.

Chaque capteur tip-timing 71 peut être de type capacitif, inductif, à courants de Foucault, ou encore une sonde optique ces différents types de capteurs étant robustes, précis et peu encombrants.

Le procédé de détection, à partir d'une pluralité de capteurs tip-timing, de l'endommagement d'une ou plusieurs aubes 31 mobiles constitutives de la roue aubagée est maintenant décrit.

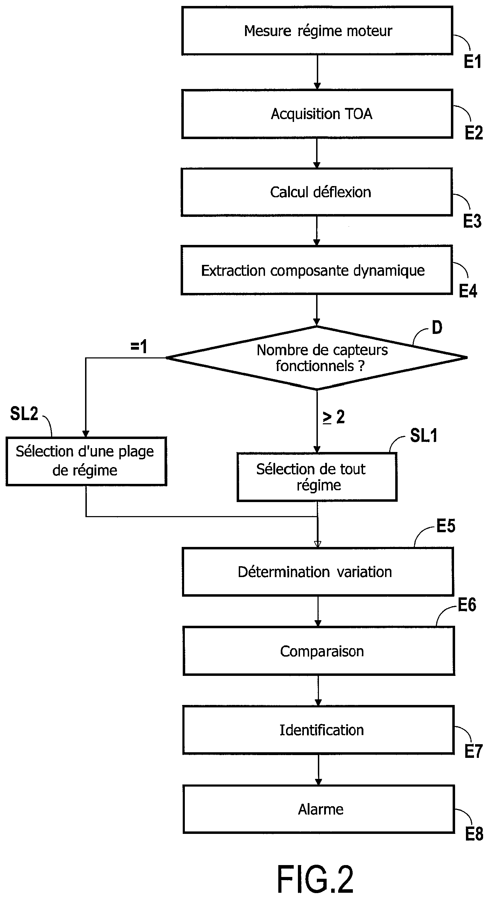

La Figure 2 illustre le procédé de détection exécuté en parallèle pour chaque capteur tip-timing 71. Ce procédé se place donc ici du point de vue d'un unique capteur tip-timing 71, mais est exécuté pour l'ensemble des capteurs.

Comme illustré sur la Figure 2, ce procédé comprend une étape de mesure E1 du régime du moteur 5 réalisée par les moyens d'acquisition 7. Comme expliqué ci-dessus, la mesure du régime du moteur 5 peut être réalisée par le capteur tip-timing 71 ou le capteur 21 de top tour.

Parallèlement, le capteur tip-timing 71 effectue des mesures relatives aux temps/instants de passage du sommet de chaque aube mobile au droit du capteur. Les mesures peuvent à titre d'exemple consister en la mesure d'un signal temporel continu relatif aux passages du sommet de chaque aube 31 au droit du capteur tip-timing 71. Les moyens de traitement 11 effectuent alors, via le module de calcul 13, un conditionnement des mesures issues du capteur tip-timing 71. Ce conditionnement consiste à identifier en temps réel chaque aube 31 dans le signal temporel mesuré à l'aide d'une référence angulaire (ex : le top tour T12), extraire du signal temporaire le temps de passage (TOA) relatif à une aube 31 identifiée, associer à l'aube 31 identifiée son temps de passage extrait ainsi qu'une information relative à son numéro de tour et à l'identité du capteur 71. Ainsi, l'ensemble des opérations décrites ci-dessus constituent des sous-étapes permettant l'acquisition des temps/instants de passage pour chaque aube 31 (étape E2).

Pour chaque acquisition d'un temps de passage (TOA) d'une aube 31, les moyens de traitement 11 calculent, via le module de calcul 13, une déflexion au sommet de cette aube (étape E3).

On entend ici par déflexion, l'écart spatial du sommet de l'aube 31 par rapport à une position théorique de celle-ci au repos. De manière connue, cet écart spatial s'explique par le fait qu'une aube 31 en rotation présente un phénomène de courbure lié à la force centrifuge, ainsi que des vibrations autour de sa position d'équilibre liées à son environnement, contrairement à un modèle théorique considérant l'aube 31 comme indéformable en rotation.

La déflexion spatiale est calculée à partir d'une soustraction entre le temps de passage réel mesuré (TOA) de l'aube 31 et un temps de passage théorique calculé pour celle-ci, le résultat de cette soustraction étant ensuite mis en relation avec la vitesse tangentielle de l'aube 31 pour le régime mesuré du moteur 5. Le temps de passage théorique de l'aube 31 est lui aussi calculé à partir du régime mesuré du moteur 5. Le calcul du temps de passage théorique de l'aube 31 est bien connu de l'homme du métier et n'est donc pas rappelé ici.

Comme il va être vu par la suite, on cherche à déterminer, à partir des mesures de chaque capteur 71, des variations éventuelles de comportements dynamiques parmi les aubes 31 mobiles. De manière connue, chaque déflexion est décomposable en une composante statique et une composante dynamique. Seule la composante dynamique va ici être considérée, car celle-ci est liée à la fréquence propre de l'aube 31, cette fréquence propre permettant de détecter toute dégradation éventuelle des propriétés mécaniques de l'aube 31. Autrement dit, la composante dynamique de la déflexion d'une aube 31 est liée au comportement dynamique de cette aube.

Ainsi, au cours de l'étape E4, les moyens de traitement 11 extraient, via un module d'extraction 111 illustré sur la figure 1, la composante dynamique pour chaque déflexion calculée, c'est-à-dire l'isolent de la composante statique. L'extraction de la composante dynamique est réalisée à l'aide de méthodes d'isolation connues de l'état de l'art (ex : moyenne, ou utilisation d'un filtre passe haut pour extraire une composante haute fréquence).

Le module d'extraction 111 comprend par ailleurs un sous-module de dé-contextualisation 111a. Le sous-module de dé-contextualisation 111a est configuré pour réaliser au cours de l'étape d'extraction une sous-étape de dé-contextualisation de chaque composante dynamique vis-à-vis des paramètres du vol (ex : régime moteur, vitesse, phases de vol). Cette dé-contextualisation a pour objet d'isoler la composante dynamique de chaque aube 31 vis-à-vis des autres aubes 31 d'un même ensemble, étant donné que dans le cas contraire les aubes d'un même ensemble de la roue aubagée 3 sont censées voir les mêmes conditions de vol. La sous-étape de dé-contextualisation, réalisée par le sous-module de dé-contextualisation 111a, permet alors d'isoler le comportement dynamique de chaque aube 31 par une formulation comparable entre chaque vol, permettant alors d'utiliser ces données en tant que référentiel. La dé-contextualisation de la composante dynamique d'une aube 31 est effectuée à chaque tour de cette aube 31, en tenant compte respectivement de l'ensemble des composantes dynamiques des autres aubes 31 de la roue aubagée 3 pour le même numéro de tour.

Plus précisément, la dé-contextualisation de la composante dynamique d'une aube 31 est réalisée en calculant, pour un même numéro de tour, la différence entre la composante dynamique de l'aube 31 et une moyenne de l'ensemble des composantes dynamiques des autres aubes 31 de la roue aubagée 3. A titre d'exemple, pour une roue aubagée 3 comprenant N aubes 31 et pour un même numéro de tour de l'ensemble des aubes 31 de la roue aubagée 3, la dé-contextualisation de la composante dynamique d'une aube 31 numéro i (où i est un entier) est réalisée comme suit. Après extraction de l'ensemble des composantes dynamiques des aubes 31 pour un même numéro de tour, on calcule la moyenne de l'ensemble des composantes dynamiques des N-1 autres aubes 31 numéro j, où j est un entier et j≠i. On retranche ensuite à la composante dynamique de l'aube i la moyenne précédemment calculée, permettant ainsi une dé-contextualisation de la composante dynamique de l'aube 31 numéro i. Un même type de dé-contextualisation est également appliquée à chacune des composantes dynamiques des autres aubes 31 numéro j. Cette dé-contextualisation permet donc de comparer le comportement dynamique de chaque aube 31 par rapport au comportement dynamique moyen de l'ensemble des autres aubes de la roue aubagée 3 lorsque celles-ci passent au droit d'un même capteur tip-timing 71 durant un même tour.

Suite à l'étape d'extraction E4, les moyens de traitement 11 détectent au cours d'une étape D, via un module de détection 112, le nombre de capteurs 71 fonctionnels à cet instant, c'est-à-dire le nombre de capteurs non-défaillants/supposés fonctionner. On entend ici par capteur 71 fonctionnel un capteur renvoyant une impulsion observable sur le signal S1 à chaque fois qu'une aube 31 passe au droit de celui-ci. Bien entendu, l'impulsion observable dans le signal S1 doit être exploitable afin de pouvoir déterminer les temps/instants de passage (TOA) de chaque aube 31. De manière connue, diverses méthodes peuvent alors être envisagées pour détecter le dysfonctionnement d'un capteur 71.

A titre d'exemple, lors du passage d'une aube 31 au droit du capteur 37, si on observe un signal S1 saturé, ou l'absence d'impulsion dans le signal S1, ou encore de multiples impulsions dans le signal S1 au lieu d'une unique attendue, on déduit un dysfonctionnement de ce capteur 71. La détection du dysfonctionnement d'un capteur 71 peut également porter sur sa précision de mesure, c'est-à-dire l'exploitabilité de son signal S1. Le dysfonctionnement d'un capteur 71 peut à titre d'exemple être détecté en fonction de son rapport signal à bruit. Dans un autre exemple, le dysfonctionnement d'un capteur 71 est détecté par comparaison de son signal S1 vis-à-vis des autres capteurs, un comportement éloigné des autres capteurs permettant de déduire un dysfonctionnement.

Dans le présent procédé, au moins un capteur 71, à savoir le capteur 71 auquel s'applique la présente itération du procédé est supposé fonctionner. Deux configurations suite à l'étape de détection D sont alors envisagées.

Selon une première configuration, le nombre de capteurs 71 détectés comme fonctionnels peut être supérieur ou égal à deux. Au moins un autre capteur, en plus du capteur 71 auquel s'applique le présent procédé, est donc fonctionnel. Dans cette configuration, l'utilisation d'au moins deux capteurs tip-timing 71 permet avantageusement la détection d'un endommagement éventuel d'une ou plusieurs aubes 31 sur l'ensemble des plages de régime du moteur 5. Ainsi, lorsque le nombre de capteurs 71 fonctionnant est supérieur ou égal à deux, un module de sélection 113 (intégré aux moyens de traitement 11), sélectionne au cours d'une étape SL1 les composantes dynamiques correspondant à chaque aube 31 de la roue aubagée 3 pour toute plage de régime du moteur 5. Le résultat de cette sélection SL1 est communiqué à un module de traitement 114 (intégré aux moyens de traitement 11) dont les opérations sont détaillées par la suite.

Selon une deuxième configuration, le nombre de capteurs 71 détectés comme fonctionnant au cours de l'étape D est égal à un. Ainsi, seul le capteur tip-timing 71 auquel s'applique le présent procédé est supposé fonctionnel. Le procédé bascule alors dans un mode de secours apte à permettre la détection d'un endommagement d'au moins une aube 31 à l'aide de l'unique capteur 71 fonctionnant. Pour ce faire, les moyens de traitement 11 réalisent alors, via le module de sélection 113, une étape de sélection SL2 d'une ou plusieurs plages de régime du moteur 5 pour lesquelles l'ensemble des aubes 31 de la roue aubagée 3 sont supposées synchrones, c'est-à-dire supposées présenter un même comportement vibratoire pour une même plage de régime du moteur 5. Les plages de régime du moteur 5 sont ici pré-identifiées par rapport à une base de données de référence, par exemple la base de données D1, comme garantissant que l'ensemble des aubes 31 présentent un même comportement vibratoire lorsqu'elles passent au droit du capteur-timing 71.

Avantageusement, l'étape de sélection SL2 permet de conférer une robustesse au procédé de détection, permettant à celui-ci de continuer à fonctionner en cas de perte d'un ou plusieurs capteurs, tant qu'un unique capteur tip-timing 71 demeure fonctionnel. Ainsi, grâce à cette étape un unique capteur tip-timing 71, à savoir le capteur auquel s'applique le procédé, est utilisé par le système 1 de détection. Le positionnement de ce capteur 71 n'a par ailleurs pas d'importance tant qu'il demeure en regard des aubes 31 mobiles de la roue aubagée 3.

En effet, pour une ou plusieurs plages pré-identifiées de régime du moteur 5, des aubes 31 mobiles non-endommagées sont censées présenter un même comportement au regard de tout azimut de la roue aubagée 3 à la traversée d'un phénomène synchrone. Par conséquent, la position du capteur tip-timing 71 en charge de mesurer les temps de passage (TOA) du sommet de chaque aube 31 n'influence pas les résultats. Le résultat de cette sélection SL2 est communiqué au module de traitement 114 dont les opérations sont détaillées par la suite.

Seules les composantes dynamiques sélectionnées au cours des étapes de sélection SL1 ou SL2 sont prises en compte dans la suite du procédé. Ainsi, suite à l'étape de sélection SL1, l'ensemble des composantes dynamiques des aubes 31 sont prises en compte dans le procédé indépendamment du régime du moteur 5, donc pour toutes les plages de régime de celui-ci. A l'inverse, suite à l'étape de sélection SL2, seules les composantes dynamiques d'une ou plusieurs plages de régime du moteur 5 pour lesquelles l'ensemble des aubes 31 de la roue aubagée 3 sont supposées présenter un même comportement vibratoire sont prises en compte pour la détection d'un éventuel endommagement.

Suite à l'étape de sélection SL1 ou SL2, le module de traitement 114 prend pour entrées les composantes dynamiques sélectionnées. Le module de traitement 114 est configuré pour déterminer (étape E5) une éventuelle variation du comportement dynamique d'une ou plusieurs aubes 31, en déterminant une variation des composantes dynamiques sélectionnées pour chaque aube 31, et en mettant ces variations en relation avec une base de données référentielle. Les résultats de l'étape de détermination E5 sont de plus ajoutés à la base de données de suivi, ici la base de données D2. Ainsi, l'étape de détermination E5 peut être vue comme une étape d'analyse du comportement dynamique vibratoire de chaque aube 31 à partir de sa composante dynamique correspondante qui a été sélectionnée suite l'étape de sélection SL1 ou SL2.

La base de données référentielle est par exemple la base de données D1. Cette base de données comprend notamment différents seuils et mesures reliés à la fréquence propre de chaque aube 31 de la roue aubagée 3. L'ensemble des données de cette base sert de référentiel pour définir le comportement nominal de chaque aube 31 et permet donc de caractériser le comportement et l'état de santé de toute aube 31 de la roue aubagée 3.

La base de données D1 référentielle peut être constituée au cours d'une phase d'apprentissage, par exemple durant un vol de l'aéronef lorsque le moteur 5 est neuf ou réparé et que les aubes 31 ne présentent aucune usure. En alternative, la phase d'apprentissage peut être effectuée en banc d'essais.

En vue de constituer la base de données D1 référentielle, la phase d'apprentissage peut être conçue de manière à permettre de :
- déterminer un ou plusieurs seuils définissants une bonne santé ou un endommagement d'une aube 31, ces seuils étant mis en correspondance avec la composante dynamique de sa déflexion, et donc indirectement avec la fréquence propre de l'aube 31 ;
- déterminer les fréquences propres de chaque aube 31 à partir d'au moins un des seuils enregistrés dans la base de données D1.

Dans le procédé ici décrit, la phase d'apprentissage a déjà été exécutée et les moyens de traitement 11 procèdent, via un comparateur 115 à une étape de comparaison E6 suite à l'étape de détermination E5. L'étape de comparaison E6 consiste à comparer chaque variation détectée d'une composante dynamique de déflexion d'une aube 31, c'est-à-dire chaque variation de son comportement dynamique, avec un ou plusieurs seuils préenregistrés dans la base de données D1 référentielle.

Au cours de cette étape E6, chaque variation de composante dynamique, et donc de comportement dynamique, détectée pour une aube 31 est notamment comparée à un premier seuil de variation, qui correspond indirectement à un état de santé de l'aube. Ce premier seuil est lié à un deuxième seuil qui concerne la variation de la fréquence propre de l'aube 31, l'atteinte de ce seuil correspondant à un endommagement de l'aube 31.

Les premier et deuxième seuils ont été déterminés puis enregistrés dans la base de données D1 référentielle au cours d'une phase d'apprentissage initiale.

La détection d'une variation de la composante dynamique de la déflexion de l'aube 31, c'est-à-dire la variation de son comportement dynamique, est donc ici liée à la détection indirecte d'une dérive de la fréquence propre de cette aube 31, cette dérive au-delà d'un seuil prédéterminé traduisant un endommagement de celle-ci.

Ainsi, si la variation de la composante dynamique de la déflexion/du comportement dynamique de l'aube 31 est supérieure au premier seuil de variation, cela signifie que la fréquence propre de l'aube 31 présente elle-même une dérive traduisant un endommagement durable de l'aube 31. En effet, un endommagement durable de l'aube 31 conduit à une dérive de sa fréquence propre et donc à une dérive de la composante dynamique de sa déflexion.

Par conséquent, lorsque le comparateur 115 détecte que la variation de la composante dynamique de la déflexion/du comportement dynamique de l'aube 31 est supérieure ou égale au premier seuil, le comparateur 115 identifie (étape E7) l'aube 31 comme endommagée.

Une alarme indiquant l'endommagement de l'aube 31 peut alors être émise (étape E8) à destination des moyens d'alertes 9 (via par exemple, des moyens sonores et/ou de visualisation). De même, des messages à envoyer ou à tenir à disposition de la maintenance peuvent être déclenchés au cours de l'émission de l'alarme.

Le procédé ci-dessus étant décrit pour un capteur 71 et exécuté de manière parallèle pour chaque capteur 71, il est possible que l'ensemble des capteurs 71 fonctionnant n'identifient pas initialement à un même instant une nouvelle occurrence d'un endommagement d'une aube 31.

En effet, étant donné que l'on cherche ici à détecter l'endommagement permanent d'une aube 31, seule une détection concomitante sur la durée (ex : au cours d'un même vol ou vol à vol) par l'ensemble des capteurs 71 fonctionnant permettra de valider l'endommagement durable de l'aube 31.

A l'inverse, l'occurrence d'événements asynchrones et éphémères, par exemple l'ingestion d'un corps étranger impactant une aube 31 et venant l'exciter de manière impulsionnelle, ou encore l'apparition d'un phénomène aéroacoustique passager, peuvent entraîner des vibrations temporaires de l'aube 31 s'amortissant dans le temps, sans pour autant conduire à une dégradation durable de cette dernière.

Plus il y aura de capteurs, plus la précision sera grande, et plus d'éventuelles vibrations transitoires seront susceptibles d'être détectées par au moins un capteur 71, mais pas nécessairement par tous compte tenu de l'amortissement vibratoire. Ainsi, plus il y a de capteurs 71, plus la probabilité qu'un ou plusieurs capteurs soient susceptibles de détecter une variation de comportement dynamique d'une aube 31 liée phénomène transitoire est importante. La détection d'un phénomène transitoire peut être ajouté à la base de données D2 de suivi de vol avec l'identité du ou des capteurs 71 qui l'ont détecté. Le système 1 permet donc la détection et le suivi des phénomènes transitoires.

Cependant, l'objet principal étant ici de détecter un endommagement durable d'une ou plusieurs aubes 31, il est souhaitable de ne pas générer d'alarme suite à la détection d'un phénomène transitoire. Ainsi, l'étape d'identification E7 peut comprendre des sous-étapes visant à générer ou supprimer l'émission d'une alarme.

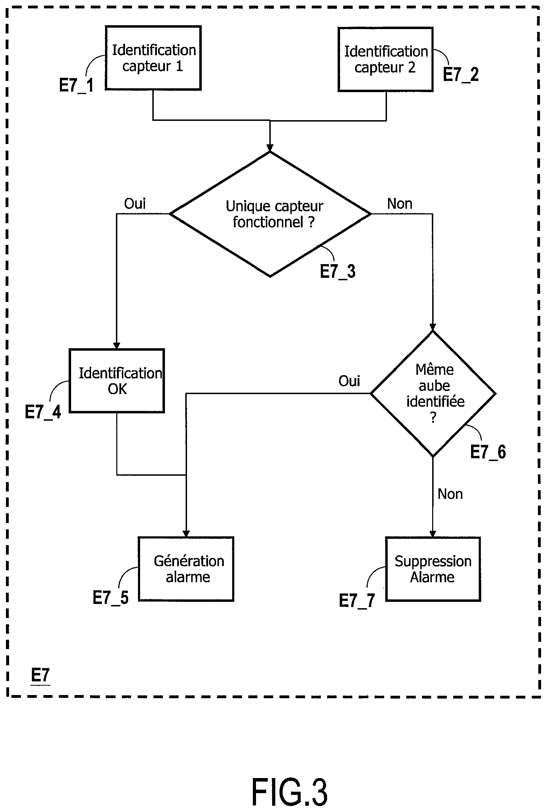

Ces étapes sont illustrées sur la figure 3 dans l'exemple de deux capteurs 71. Cependant les étapes suivantes sont aussi applicables à un nombre plus élevé de capteurs 71.

Les étapes E7_1 et E7_2 consistent respectivement à récupérer une première information relative à l'aube 31 identifiée comme endommagée à partir d'un premier capteur 71 pour lequel est exécuté le procédé, ici le « capteur 1 », et au moins une deuxième information relative à une aube 31 identifiée comme endommagée à partir d'un second capteur 71, ici le « capteur 2 ».

L'étape E7_3, détermine ensuite si un unique capteur 71 est fonctionnel (mode de secours) à partir du résultat de l'étape de détection D.

Dans le cas où seulement un unique capteur 71 fonctionne, l'identification de l'endommagement de l'aube 31 à partir des mesures du premier capteur 71, « capteur 1 », est confirmée dans une étape E7_4 par un module de confirmation 116 et une alarme relative à cette aube 31 est générée dans une étape E7_5 suivante.

Dans le cas où il n'y a pas qu'un seul capteur 71 qui fonctionne, c'est-à-dire qu'au moins deux capteurs 71 sont fonctionnels, on compare alors dans une étape suivante E7_6 les informations relatives aux aubes 31 identifiées comme endommagées à partir de chaque capteur 71 fonctionnel. Si l'identification d'une même aube 31 est commune à chaque capteur 71, c'est-à-dire si chacun des capteurs 71 fonctionnels détecte l'endommagement d'une même aube 31, cela signifie qu'un endommagement durable de cette aube 31 a été détecté. L'endommagement de l'aube détectée 31 est alors confirmé par le module de confirmation 116 et une alarme relative à cette aube est générée au cours de l'étape E7_5.

En revanche, si l'un des capteurs 71 fonctionnels n'identifie pas d'endommagement pour une aube 31 alors que le ou les autres capteurs 71 en ont identifié un, dans cet exemple de mode de réalisation, aucune alarme n'est émise dans une étape E7_6. La divergence d'identification entre les capteurs 71 pour une même aube 31 peut survenir dans deux cas. Dans un premier cas, comme expliqué plus haut, le capteur 71 ayant identifié un endommagement a en fait détecté l'occurrence d'un phénomène temporaire, et non un endommagement durable de l'aube 31. Dans un second cas, le capteur 71 n'ayant pas identifié un endommagement d'une aube 31 a en fait détecté un phénomène temporaire qui, à l'instant de passage de l'aube 31 au droit de ce capteur 71, a compensé la détection de l'endommagement de l'aube 31. Ces événements peuvent éventuellement être ajoutés à la base de données D2 de suivi de vol, et un message de suppression d'alarme relatif à l'aube détectée comme durablement endommagée est généré au cours d'une étape E7_6. La non-génération d'une alarme (étape E7_6) relative à l'endommagement d'une aube 31 est donc valable à un instant précis où l'on suspecte la détection par un des capteurs 71 d'un phénomène temporaire. A l'inverse, étant donné que l'on cherche à détecter l'endommagement persistant d'au moins une aube 31, la génération d'une alarme (étape E7_5) résulte ici d'une persistance temporelle d'une identification d'un endommagement de l'aube 31, détectée par exemple au cours d'un même vol ou à vols.

Par ailleurs, afin de minimiser l'émission de fausses alarmes, l'étape de comparaison E6 peut en outre mettre en œuvre une succession de sous-étapes consistant à isoler les aubes 31 susceptibles d'être dégradées des aubes probablement saines. Cette sous-étape peut être réalisée par comparaison de proche en proche du comportement dynamique observé pour chaque aube 31, par exemple par comparaison des variations des composantes dynamiques de chaque aube 31 avec divers seuils de références qui ont été préenregistrés dans la base de données D1 référentielle au cours d'une phase d'apprentissage initiale.

A titre d'exemple, durant une phase d'apprentissage, il est possible de comparer pour une aube 31 dans un cas nominal, c'est-à-dire en l'absence d'endommagement, le comportement dynamique de cette aube 31 vis-à-vis des autres aubes 31 de la roue aubagée 3. Le résultat obtenu pour cette comparaison sert alors de référence comportementale dans la base de données D1. Au cours de l'étape E6, une comparaison du comportement dynamique de cette même aube 31 vis-à-vis des autres aubes 31 de la roue aubagée 3 est de nouveau effectuée. Durant l'étape E6, les résultats des comparaisons effectuées pour l'aube 31 au cours de l'étape E6 et de la phase d'apprentissage sont alors eux même comparés. En fonction de l'écart obtenu entre la référence comportementale déterminée au cours de la phase d'apprentissage et le comportement dynamique de l'aube 31 déterminé au cours de l'étape E6, l'aube 31 peut alors être éventuellement présumée dégradée et isolée .

Toujours afin de minimiser l'émission de fausses alarmes, la phase d'identification E7 peut comprendre en outre une sous-étape permettant de confirmer l'endommagement d'une aube 31 via le franchissement de seuils en liens avec les présomptions de l'étape de comparaison E6 et une purification des fausses alertes par vraisemblance. A titre d'exemple, l'endommagement d'une aube 31 est confirmé seulement si la variation de sa composante/son comportement dynamique, déterminée à l'étape E5, est supérieure à un seuil préenregistré dans la base de données D1 et si l'aube 31 a été présumée dégradée et isolée au cours de l'étape E6.

Avantageusement, le procédé décrit ci-dessus permet d'identifier l'endommagement d'au moins une aube 31 mobile à partir d'une détection indirecte de la dérive de sa fréquence propre. La mesure des temps/instants de passage (TOA) de chaque aube 31 par chaque capteur 71 et la connaissance du régime du moteur 5 permettent de calculer les déflexions relatives aux sommets de chaque aube 31.

D'éventuelles dérives du comportement dynamique de chaque aube 31 sont alors surveillées, la dérive du comportement dynamique d'une aube 31 donnant une indication sur la dérive de la fréquence propre de celle-ci.

Ainsi la détection d'une dérive du comportement dynamique d'une aube 31 et la comparaison de celle-ci avec au moins un seuil prédéterminé, caractérisant un état de santé de l'aube, permet de conclure ou non à l'endommagement de cette aube 31. L'endommagement éventuel d'une aube 31 peut donc être détecté sans pour autant nécessiter le calcul de sa fréquence propre. Le procédé décrit ci-dessus est donc particulièrement simple à mettre en œuvre et ne nécessite pas d'importantes ressources en calcul. L'intégration du procédé ci-dessus est donc facilement intégrable dans un système embarqué de l'aéronef. Ce procédé est en outre à applicable à' tout type d'aube, par exemple à des aubes composites ou métalliques.

L'utilisation d'une pluralité de capteurs 71 permet par ailleurs de conférer une robustesse au procédé de détection. En effet, même en cas de perte d'un capteur 71, la détection de l'endommagement d'au moins une aube 31 demeure possible à partir d'un unique capteur. Une détection d'un endommagement durable d'une ou plusieurs aubes 31 à partir de deux capteurs s'avère donc efficace et facilement intégrable.

Comme exposé ci-dessus, une détection d'un endommagement d'au moins une aube 31 à partir d'un unique capteur 71 correspond à un mode de secours pour une situation où l'on aurait perdu un ou plusieurs autres capteurs 71. Idéalement, on préférera donc une détection à partir d'une pluralité de capteurs 71, cette détection présentant pour avantage de pouvoir être effectuée sur l'ensemble des plages du régime du moteur 5. Ainsi, afin de renforcer la robustesse du procédé, l'utilisation dans le système 1 de détection de trois capteurs 71 ou plus peut être envisagée afin de demeurer, même en cas de panne d'un des capteurs, dans une configuration de détection multi-capteurs.

## Revendications

1. Procédé de détection d'un endommagement d'une ou plusieurs aubes (31) mobiles constitutives d'une roue aubagée (3) d'un moteur (5) d'aéronef, le procédé comprenant une mesure (E1) du régime du moteur (5), et les étapes suivantes pour chaque aube (31):
a) une acquisition (E2), par une pluralité de capteurs (71) distincts et spatialement séparés, de mesures relatives au temps de passage du sommet de l'aube (31) au droit de chaque capteur (71) ; et
b) un calcul (E3), pour chaque capteur (71), d'une déflexion au sommet de l'aube (31) à partir des mesures du capteur (71) et du régime du moteur (5) ;
**caractérisé en ce que** le procédé comprend en outre les étapes suivantes :
c) une extraction (E4) d'une composante dynamique de déflexion pour chacune des déflexions calculées ;
d) une détection (D) du nombre de capteurs (71) fonctionnant ;
e) une sélection (SL1, SL2) des composantes dynamiques à traiter en fonction du nombre de capteurs (71) fonctionnant détecté à l'étape d) ;
f) une détermination (E5), pour au moins une aube (31), d'une variation de comportement dynamique de l'aube (31) pour chaque capteur (71) fonctionnant à partir de la composante dynamique correspondante ; et,
g) pour chaque aube (31) pour laquelle une variation de comportement dynamique a été déterminée, une identification (E7) d'un endommagement de l'aube (31) lorsque la variation de comportement dynamique déterminée pour cette aube (31) est supérieure ou égale à un seuil de variation définissant un seuil d'endommagement de l'aube (31).

2. Procédé de détection selon la revendication 1, dans lequel l'étape d'extraction (E4) de la composante dynamique de chaque aube (31) mobile comprend une dé-contextualisation de cette composante, la dé-contextualisation comportant pour un même tour de la roue aubagée (3) un calcul de la différence entre la composante dynamique de l'aube mobile (31) et une moyenne des composantes dynamiques des autres aubes mobiles (31) de la roue aubagée (3).

3. Procédé de détection selon les revendications 1 ou 2, dans lequel, si on détecte à l'étape d) un seul capteur (71) en fonctionnement, les étapes de détermination f) et d'identification g) sont mises en œuvre pour au moins une plage de régime du moteur (5) pour laquelle l'ensemble des aubes (31) sont pré-identifiées comme présentant un même comportement vibratoire, la variation de composante dynamique étant déterminée à l'étape f) pour l'ensemble des aubes (31) dans ladite au moins une plage de régime du moteur (5).

4. Procédé de détection selon l'une quelconque des revendications 1 à 3, dans lequel, si le fonctionnement d'au moins deux capteurs (71) est détecté à l'étape d), les étapes de détermination f) et d'identification g) sont mises en œuvre pour l'ensemble des plages de régime du moteur (5), et le procédé comprend en outre l'étape suivante :
h) une confirmation de l'endommagement de ladite aube (31) à partir des endommagements identifiés à l'étape f).

5. Procédé de détection selon la revendication 4, dans lequel l'endommagement de l'aube (31) est confirmé à l'étape h) uniquement si les mesures d'au moins deux capteurs (71) permettent l'identification (E7) du même endommagement de l'aube (31).

6. Programme d'ordinateur comportant des instructions de code pour la mise en œuvre du procédé selon l'une quelconque des revendications 1 à 5 lorsqu'il est exécuté par un ordinateur.

7. Système (1) de détection d'un endommagement d'une ou plusieurs aubes mobiles (31) constitutives d'une roue aubagée (3) d'un moteur (5) d'aéronef, le système (1) comprenant :
- des moyens d'acquisition (7) configurés pour mesurer le régime du moteur (5) et acquérir, à l'aide d'une pluralité de capteurs (71) distincts et spatialement séparés, pour chaque aube (31), des mesures relatives au temps de passage du sommet de chaque aube (31) au droit de chaque capteur, et
- des moyens de traitement (11) comportant un module de calcul (13) configuré pour calculer, pour chaque capteur, une déflexion au sommet de chaque aube (31) à partir des mesures correspondantes du capteur et du régime du moteur (5) ;
**caractérisé en ce que** les moyens de traitement (11) comportent en outre:
- un module d'extraction (111) configuré pour extraire une composante dynamique de déflexion pour chacune des déflexions calculées ;
- un module de détection (112) configuré pour détecter le nombre de capteurs (71) fonctionnant ;
- un module de sélection (113) configuré pour sélectionner les composantes dynamiques à délivrer à un module de traitement (114) en fonction du nombre de capteurs (71) fonctionnant détectés par le module de détection (113) ;
- un module de traitement (114) configuré pour déterminer, pour au moins une aube (31), une variation de de comportement dynamique d'une aube (31) pour chaque capteur (71) fonctionnant à partir de la composante dynamique correspondante ;
- un comparateur (115) configuré pour identifier, pour chaque aube (31) pour laquelle une variation de comportement dynamique a été déterminée, un endommagement d'une aube (31) lorsque la variation de comportement dynamique déterminée de ladite aube (31) est supérieure ou égale à un seuil de variation définissant un seuil d'endommagement de l'aube (31).

8. Système (1) de détection selon la revendication 7, dans lequel le module d'extraction (111) de la composante dynamique de chaque aube (31) mobile comprend un sous-module de dé-contextualisation (111a) de la composante dynamique, configuré pour réaliser pour un même tour de la roue aubagée (3) un calcul de la différence entre la composante dynamique de l'aube mobile (31) et une moyenne des composantes dynamiques des autres aubes mobiles (31) de la roue aubagée (3).

9. Système (1) de détection selon les revendications 7 ou 8, dans lequel si le fonctionnement d'un unique capteur (71) est détecté par le module de détection (112), le module de traitement (114) et le comparateur (115) sont respectivement configurés pour déterminer une variation de déflexion et identifier un endommagement d'une aube (31) pour au moins une plage de régime du moteur (5) pour laquelle l'ensemble des aubes (31) sont pré-identifiées comme présentant un même comportement vibratoire.

10. Système (1) de détection selon l'une quelconque des revendications 7 à 9, dans lequel si le fonctionnement d'au moins deux capteurs (71) est détecté par le module de détection (112) le module de traitement (114) et le comparateur (115) sont respectivement configurés pour déterminer une variation de déflexion et identifier un endommagement d'une aube (31) pour chaque aube (31) mobile de la roue aubagée (3) dans l'ensemble des plages de régime du moteur (5), et dans lequel les moyens de traitement (11) comprennent en outre un module de validation (116) configuré pour valider un endommagement d'une aube (31) à partir des endommagements identifiés par le comparateur (115).

11. Système (1) de détection selon la revendication 10, dans lequel le module de validation (116) est configuré pour valider l'endommagement de l'aube (31) uniquement si les mesures d'au moins deux capteurs (71) permettent l'identification du même endommagement de l'aube (31).

12. Système (1) de détection selon l'une quelconque des revendications 7 à 11, dans lequel les capteurs (71) sont des capteurs tip-timing (71) installés au droit de ladite roue aubagée (3).

13. Système (1) de détection selon l'une quelconque des revendications 7 à 12, dans lequel les moyens de traitement (11) sont intégrés dans un boitier spécifique ou dans un boitier électronique existant.

## Patentansprüche

1. Verfahren zur Erkennung von Schäden an einer oder mehreren beweglichen Schaufeln (31), die ein Schaufelrad (3) eines Flugzeugmotors (5) bilden, wobei das Verfahren eine Messung (E1) der Drehzahl des Motors (5) und die folgenden Schritte für jede Schaufel (31) umfasst:
a) Erfassen (E2), von einer Vielzahl verschiedener und räumlich getrennter Sensoren (71), von Messungen, die sich auf die Passierdauer der Spitze der Schaufel (31) im rechten Winkel zu jedem Sensor (71) beziehen; und
b) Berechnen (E3), für jeden Sensor (71), einer Ablenkung an der Spitze der Schaufel (31) ausgehend von den Messungen des Sensors (71) und der Drehzahl des Motors (5);
**dadurch gekennzeichnet, dass** das Verfahren ferner die folgenden Schritte umfasst:
c) Extrahieren (E4) einer dynamischen Ablenkungskomponente für jede berechnete Ablenkung;
d) Erkennen (D) der Anzahl der Sensoren (71) im Betrieb;
e) Auswählen (SL1, SL2) der zu verarbeitenden dynamischen Komponenten in Abhängigkeit von der Anzahl der Sensoren (71) im Betrieb, die in Schritt d) erkannt wurde;
f) Bestimmen (E5), für mindestens eine Schaufel (31), einer Veränderung des dynamischen Verhaltens der Schaufel (31) für jeden Sensor (71) im Betrieb ausgehend von der entsprechenden dynamischen Komponente; und
g) für jede Schaufel (31), für die eine Veränderung des dynamischen Verhaltens bestimmt wurde, Identifizieren (E7) eines Schadens der Schaufel (31), wenn die Veränderung des für diese Schaufel (31) bestimmten dynamischen Verhaltens größer oder gleich einem Veränderungsgrenzwert ist, der einen Schadengrenzwert der Schaufel (31) definiert.

2. Erkennungsverfahren nach Anspruch 1, wobei der Schritt des Extrahierens (E4) der dynamischen Komponente jeder beweglichen Schaufel (31) eine Dekontextualisierung dieser Komponente umfasst, wobei die Dekontextualisierung für die gleiche Umdrehung des Schaufelrads (3) eine Berechnung der Differenz zwischen der dynamischen Komponente der beweglichen Schaufel (31) und einem Mittelwert der dynamischen Komponenten der anderen beweglichen Schaufeln (31) des Schaufelrads (3) aufweist.

3. Erkennungsverfahren nach den Ansprüchen 1 oder 2, wobei, wenn in Schritt d) ein einziger Sensor (71) im Betrieb erkannt wird, die Schritte des Bestimmens f) und des Identifizierens g) für mindestens einen Drehzahlbereich des Motors (5) durchgeführt werden, für den die Gesamtheit der Schaufeln (31) als dasselbe Vibrationsverhalten aufweisend voridentifiziert sind, wobei die Veränderung der dynamischen Komponente in Schritt f) für die Gesamtheit der Schaufeln (31) in dem mindestens einen Drehzahlbereich des Motors (5) bestimmt wird.

4. Erkennungsverfahren nach einem der Ansprüche 1 bis 3, wobei, wenn der Betrieb von mindestens zwei Sensoren (71) in Schritt d) erkannt wird, die Schritte des Bestimmens f) und des Identifizierens g) für die Gesamtheit der Drehzahlbereiche des Motors (5) durchgeführt werden und das Verfahren ferner den folgenden Schritt umfasst:
h) Bestätigen der Schäden an der Schaufel (31) ausgehend von den in Schritt f) identifizierten Schäden.

5. Erkennungsverfahren nach Anspruch 4, wobei die Schäden der Schaufel (31) in Schritt h) nur dann bestätigt werden, wenn die Messungen von mindestens zwei Sensoren (71) die Identifizierung (E7) derselben Schäden der Schaufel (31) erlauben.

6. Rechnerprogramm, aufweisend Codebefehle für die Durchführung des Verfahrens nach einem der Ansprüche 1 bis 5, wenn es von einem Rechner ausgeführt wird.

7. System (1) zur Erkennung von Schäden an einer oder mehreren beweglichen Schaufeln (31), die ein Schaufelrad (3) eines Flugzeugmotors (5) bilden, wobei das System (1) umfasst:
- Erfassungsmittel (7), die ausgelegt sind, um die Drehzahl des Motors (5) zu messen und um mit Hilfe einer Vielzahl verschiedener und räumlich getrennter Sensoren (71) für jede Schaufel (31) Messungen zu erfassen, die sich auf die Passierdauer der Spitze der Schaufel (31) im rechten Winkel zu jedem Sensor beziehen; und
- Verarbeitungsmittel (11), die ein Rechenmodul (13) aufweisen, das ausgelegt ist, um für jeden Sensor eine Ablenkung an der Spitze jeder Schaufel (31) ausgehend von den entsprechenden Messungen des Sensors und der Drehzahl des Motors (5) zu berechnen;
**dadurch gekennzeichnet, dass** die Verarbeitungsmittel (11) ferner aufweisen:
- ein Extraktionsmodul (111), das ausgelegt ist, um für jede berechnete Ablenkung eine dynamische Ablenkungskomponente zu berechnen;
- ein Erkennungsmodul (112), das ausgelegt ist, um die Anzahl der Sensoren (71) im Betrieb zu erkennen;
- ein Auswahlmodul (113), das ausgelegt ist, um die dynamischen Komponenten auszuwählen, die einem Verarbeitungsmodul (114) in Abhängigkeit von der Anzahl der Sensoren (71) im Betrieb bereitzustellenden, die von dem Erkennungsmodul (113) erkannt wurden;
- ein Verarbeitungsmodul (114), das ausgelegt ist, um für mindestens eine Schaufel (31) eine Veränderung des dynamischen Verhaltens einer Schaufel (31) für jeden Sensor (71) im Betrieb ausgehend von der entsprechenden dynamischen Komponente zu bestimmen;
- einen Komparator (115), der ausgelegt ist, um für jede Schaufel (31), für die eine Veränderung des dynamischen Verhaltens bestimmt wurde, Schäden einer Schaufel (31) zu identifizieren, wenn die Veränderung des für die Schaufel (31) bestimmten dynamischen Verhaltens größer oder gleich einem Veränderungsgrenzwert ist, der einen Schadengrenzwert der Schaufel (31) definiert.

8. Erkennungssystem (1) nach Anspruch 7, wobei das Extraktionsmodul (111) der dynamischen Komponente jeder beweglichen Schaufel (31) ein Dekontextualisierungs-Untermodul (lila) der dynamischen Komponente umfasst, das ausgelegt ist, um für die gleiche Umdrehung des Schaufelrads (3) eine Berechnung der Differenz zwischen der dynamischen Komponente der beweglichen Schaufel (31) und einem Mittelwert der dynamischen Komponenten der anderen beweglichen Schaufeln (31) des Schaufelrads (3) durchzuführen.

9. Erkennungssystem (1) nach den Ansprüchen 7 oder 8, wobei, wenn vom Erkennungsmodul (112) der Betrieb eines einzigen Sensors (71) erkannt wird, das Verarbeitungsmodul (114) und der Komparator (115) jeweils ausgelegt sind, um eine Veränderung der Ablenkung zu bestimmen und Schäden einer Schaufel (31) für mindestens einen Drehzahlbereich des Motors (5) zu identifizieren, für den die Gesamtheit der Schaufeln (31) als dasselbe Vibrationsverhalten aufweisend voridentifiziert ist.

10. Erkennungssystem (1) nach einem der Ansprüche 7 bis 9, wobei, wenn vom Erkennungsmodul (112) der Betrieb von mindestens zwei Sensoren (71) erkannt wird, das Verarbeitungsmodul (114) und der Komparator (115) jeweils ausgelegt sind, um eine Veränderung der Ablenkung zu bestimmen und Schäden einer Schaufel (31) für jede bewegliche Schaufel (31) des Schaufelrads (3) in der Gesamtheit der Drehzahlbereiche des Motors (5) zu identifizieren, und wobei die Verarbeitungsmittel (11) ferner ein Bestätigungsmodul (116) umfassen, das ausgelegt ist, um Schäden einer Schaufel (31) ausgehend von den vom Komparator (115) identifizierten Schäden zu bestätigten.

11. Erkennungssystem (1) nach Anspruch 10, wobei das Bestätigungsmodul (116) ausgelegt ist, um die Schäden der Schaufel (31) nur dann zu bestätigen, wenn die Messungen von mindestens zwei Sensoren (71) die Identifizierung derselben Schäden der Schaufel (31) erlauben.

12. Erkennungssystem (1) nach einem der Ansprüche 7 bis 11, wobei die Sensoren (71) Tip-Timing-Sensoren (71) sind, die im rechten Winkel zum Schaufelrad (3) installiert sind.

13. Erkennungssystem (1) nach einem der Ansprüche 7 bis 12, wobei die Verarbeitungsmittel (11) in ein spezielles Gehäuse oder in ein vorhandenes Elektronikgehäuse integriert sind.

## Claims

1. A method for detecting damage to one or more mobile blades (31) constituting an impeller (3) of an aircraft engine (5), the method comprising measurement (E1) of the engine (5) speed, and the following steps for each blade (31):
a) acquiring (E2), by a plurality of distinct and spatially separated sensors (71), measurements relating to the blade (31) tip passage time in line with each sensor (71); and
b) calculating (E3), for each sensor (71), a deflection at the blade (31) tip based on the measurements of the sensor (71) and the engine (5) speed;
**characterized in that** the method also comprises the following steps:
c) extracting (E4) a dynamic deflection component for each of the calculated deflections;
d) detecting (D) the number of operating sensors (71);
e) selecting (SL1, SL2) the dynamic components to be processed depending on the number of operating sensors (71) detected in step d);
f) determining (E5), for at least one blade (31), a variation of the dynamic behavior of the blade (31) for each operating sensor (71) based on the corresponding dynamic component; and,
g) for each blade (31) for which a variation of dynamic behavior has been determined, identifying (E7) damage to the blade (31) when the variation of dynamic behavior determined for this blade (31) is greater than or equal to a variation threshold defining a damage threshold of the blade (31).

2. The detection method according to claim 1, wherein the step (E4) of extracting the dynamic component of each mobile blade (31) comprises de-contextualizing of this component, the de-contextualizing including, for the same rotation of the impeller (3), calculation of the difference between the dynamic component of the mobile blade (31) and an average of the dynamic components of the other mobile blades (31) of the impeller (3).

3. The detection method according to claims 1 or 2, wherein, if a single operating sensor (71) is detected in step d), the steps of determining f) and identifying g) are implemented for at least one engine (5) speed range for which a set of blades (31) are pre-identified as having the same vibrational behavior, the variation of the dynamic component being determined in step f) for the set of blades (31) in said at least one engine (5) speed range.

4. The detection method according to any one of claims 1 to 3, wherein, if the operation of at least two sensors (71) is detected in step d), the determining f) and identifying g) steps are implemented for each mobile blade (31) of the impeller (3) in the set of engine (5) operating speeds, and the method also comprises the following step:
h) confirming damage to said blade (31) based on damage identified in step f).

5. The detection method according to claim 4, wherein the damage to the blade (31) is confirmed in step h) only if the measurements of at least two sensors (71) allow identification (E7) of the same damage to the blade (31).

6. A computer program including code instructions for the implementation of the method according to any one of claims 1 to 5 when it is executed by a computer.

7. A system (1) for detecting damage to one or more mobile blades (31) constituting an impeller (3) of an aircraft engine (5), the system (1) comprising:
- acquisition means (7) configured to measure the engine (5) speed and to acquire, by means of a plurality of distinct and separate sensors (71), for each blade (31), measurements relating to the blade (31) tip passage time in line with each sensor, and
- processing means (11) including a calculation module (13) configured to calculate, for each sensor, a deflection of the tip of each blade (31) based on the corresponding measurements of the sensor and the engine (5) speed;
**characterized in that** the processing means (11) also comprise:
- an extraction module (111) configured to extract a dynamic component of deflection for each of the calculated deflections;
- a detection module (112) configured to detect the number of operating sensors (71);
- a selection module (113) configured to select the dynamic components to be delivered to a processing module (114) depending on the number of operating sensors (71) detected by the detection module (113);
- a processing module (114) configured to determine for at least one blade (31), a variation of the dynamic behavior of a blade (31) for each operating sensor (71) based on the corresponding dynamic component;
- a comparator (115) configured to identify, for each blade (31) for which a variation of the dynamic behavior has been determined, damage to a blade (31) when the determined variation of dynamic behavior of said blade (31) is greater than or equal to a variation threshold defining a damage threshold of the blade (31).

8. The detection system (1) according to claim 7, wherein the module (111) for extracting the dynamic component of each mobile blade (31) comprises a sub-module for de-contextualizing (111a) the dynamic component, configured to accomplish, for the same rotation of the impeller (3), calculation of the difference between the dynamic component of the mobile blade (31) and an average of the dynamic components of the other mobile blades (31) of the impeller (3).

9. The detection system (1) according to claims 7 or 8, wherein, if the operation of a single sensor (71) is detected by the detection module (112), the processing module (114) and the comparator (115) are respectively configured to determine a variation of deflection and to identify damage to a blade (31) for at least one engine (5) speed range for which the set of blades (31) is pre-identified as having the same vibrational behavior.

10. The detection system according to any one of claims 7 to 9, wherein, if the operation of at least two sensors (71) is detected by the detection module (112) the processing module (114) and the comparator (115) are respectively configured to determine a variation of deflection and to identify damage to a blade (31) for each mobile blade (31) of the impeller (3) in the set of engine (5) speed ranges, and wherein the processing means (11) also comprise a validation module (116) configured to validate damage to a blade (31) based on the damage identified by the comparator (115).

11. The detection system (1) according to claim 10, wherein the validation module (116) is configured to validate the damage to the blade (31) only if the measurements of at least two sensors (71) allow the identification of the same damage to the blade (31).

12. The detection system (1) according to any one of claims 7 to 11, wherein the sensors (71) are tip-timing sensors (71) installed in line with said impeller (3).

13. The detection system (1) according to any one of claims 7 to 12, wherein the processing means (11) are integrated into a specific housing or into an existing electronic housing.
